# EUROPEAN PATENT APPLICATION

(11) **EP 3 421 323 A1**
(43) Date of publication of application: **02.01.2019**
(21) Application number: 18382479.6
(22) Date of filing: 27.06.2018
(51) Int. Cl.: B62B 5/08, B62B 5/00, B62B 5/04

(54) **LOADING TROLLEY WITH A FOOTBOARD**

(30) Priority: 27.06.2017 ES 201730770 U
(71) Applicant: Industrias Vicma, S.A., 38052 Totana - Murcia (ES)
(72) Inventor: TUDELA, Christel, 30852 Totana - Murcia (ES)
(74) Representative: Temiño Ceniceros, Ignacio

(57) **Abstract**

The present invention relates to a loading trolley (1) with a footboard (4) for collecting and distributing products in warehouses and logistics centers, made up of a loading trolley (1) which allows the depositing of items, comprising a shelf structure (2) fixed to the frame (3) of the trolley; a cylindrical ring-shaped coupling (36) in the frame (3) of the trolley with internal bearings; an inclined arm (5) at the front end of the footboard (4); a braking system (7) at a back end of the footboard (4); and wherein the articulable attachment of the stem (52) of the footboard in a coupling of the trolley is secured by means of a nut and a lock washer (55).

## Description

### Field of the Invention

The present invention relates to a loading trolley for collecting and distributing products in warehouses and logistics centers, in which there is integrated an industrial scooter, and in which such integration provides the improvement of substantially reducing the times for stocking the different products requested in each order in the packaging point.

The technical field for which this invention is intended is in logistics sectors for the stocking and distribution of goods and orders, and it specifically relates to warehouses commonly known as picking warehouses, or warehouses for collecting, combining, and preparing loads making up a client's order.

### State of the Art

Within the logistics sector, the order picking or preparation process is known, and this process is based on collecting material by extracting packaged units or assemblies from a larger packaged unit containing more units than those that are extracted. This is a basic process in preparing orders in warehouses which largely affects productivity in the entire logistics chain because in many cases it constitutes the bottleneck of said chain.

Generally, these jobs involve intensive manual labor and the optimization and mechanization thereof is one of the ways to improve the output of the internal logistics chain of enterprises. Improving this process involves eliminating the least productive parts of said process. The least productive part is usually related to the travelling between the different locations where the picking process for the different products is going to take place.

In order to solve these problems, different types of loading devices and systems for collecting items in a picking process are known and they include hand bags, baskets, or boxes which have to be transported and maintained by operators under heavy conditions, which leads to slow mobility and fatigue of the picker; there are carts, loading trolleys, or manual pallet jacks such as that defined in patent documents EP2432674 or EP2590848, for example, which solve the preceding problem of the picker carrying weights, but in said documents travelling continues to be slow because it is at the pace of the picker's steps. Therefore it is still a system that increases management and order picking times, and it furthermore has reduced and slow mobility. There is a more sophisticated system that implements machinery for automating transport from the product containers from which the picking process is performed to a central picking post where the operator who is going to perform the task is located, this process being expensive as one may deduce and requiring a significant investment in implementation and maintenance.

Footboards incorporating suitcases or storage compartments in the front part are also known, such as that disclosed in patent document US20110155527, for example, which improves the movement of a user when carrying a suitcase, but in no case can it be used in the order picking or preparation sector.

The present invention has arisen in order to avoid the preceding drawbacks, i.e., to improve the mobility, speed, and stocking of items, to reduce order management times, and to be able to cover larger storage areas, all by means of a system that is cost-effective and easy-to-handle and maintain. Said invention provides a loading trolley incorporating an industrial scooter which allows the picker to travel quickly and efficiently around the work area.

Taking into account the background documents existing in the state of the art, the loading trolley with a footboard defined below solves all the problems derived from the management of a picking warehouse and presents a safe and versatile solution for the operators or pickers in said industrial sector.

### Description of the Invention

The loading trolley with a footboard described below consists of a loading trolley for collecting items incorporating front rotating wheels and rear fixed wheels, and having a movable industrial footboard incorporated therein. In order for this integration to be possible, at the base of the structure of the trolley there is a cylindrical ring-shaped attachment system with bearings which performs both the function of attaching the footboard to the trolley and the function of allowing the rotation of the assembly.

The footboard itself is made up of a metallic structure formed by sheets of metal that can incorporate H-shaped profiles for the coupling and inner housing of the wheels, the fixing of the braking system on said wheels, and the support required for the non-slip base bearing the weight of the user and allowing said user to travel around and transport items quickly while preventing the user from slipping or falling.

Said footboard is fixed to the trolley on the front end of the structure of the footboard by means of the attachment system defined above. The coupling of the footboard is performed by means of a coupling made up of an arm with a cylindrical stem, with the upper tip being threaded, and an enlarged portion by way of a stop at the base, which is introduced in the bearing system and fixed by means of a nut at the upper part to prevent the decoupling thereof. Said attachment provides the assembly with sufficient rotation for its efficient movement in the work area, as well as the orientation and stability required for the user or picker to travel on the footboard without any risks of falling.

At least one fixed wheel parallel to the longitudinal axis of the footboard is located at the back end of the footboard. If there is more than one wheel, they are fixed by means of a common axle perpendicular to said longitudinal axis. In addition to allowing the movement of the assembly, these wheels have a central separating element with a spring coupled thereto performing the dual function of keeping the wheels in their position, with the suitable separation between them that assures the stability of the assembly, as well as bearing the weight of the brake plate for keeping the braking system deactivated when it is not pressed by the user.

Additionally, a braking system consisting of a non-slip metallic plate or pressure base in the form of a flap is fixed on the wheels, in the back part of the metallic frame of the footboard. The purpose of this is to make it easier for the user to activate the braking system of the wheels as well as to fix the two metallic parts performing the dual function of supports to support the brake plate or base, as well as stops to prevent the misalignment or rotation of said operating plate of the braking system.

On the other hand, the structure of the loading trolley can be conventional, i.e., it can be in the form of a basket. Nevertheless, in order to improve existing systems, a structure is developed that is formed by an assembly of shelves arranged at different heights on preferably horizontal planes or on planes with a slight inclination which allows filling several orders at the same time. This shelf structure, which has vertical posts that stiffen the assembly, is made up of a plurality of horizontally arranged or slightly inclined profiles, which allow and make it easier to deposit orders at different heights. There is a projecting vertical guard on the sides of the shelves that retains the objects and prevents them from falling to the ground. With a total of three shelves, for example, the trolley can thereby carry boxes and fill at least 3 orders at the same time, where up to 10 orders can be filled at the same time depending on the size and volume of the boxes of said orders.

Finally, it must be pointed out that the materials for manufacturing the elements described in this specification may vary, provided that they provide sufficient resistance and consistency. Furthermore, like the shape or configuration of the industrial footboard, the shape and the configuration of the structure of the loading trolley with its different shelves are also non-limiting.

Taking all the preceding aspects into account, in order to complete the description that is being made and for the purpose of aiding to better understand the features of the invention, a set of drawings is attached to the present specification in which the following has been depicted with an illustrative and non-limiting character:
Figure 1 is an elevational depiction of a loading trolley with a footboard.
Figure 2 is a depiction of the assembly of the preceding drawing with the elements being separated, i.e., the loading trolley and the footboard are separated from one another.
Figure 3 is a perspective depiction of the footboard.
Figure 4 is a perspective depiction of the front part of the footboard.
Figure 5 is a perspective depiction of the back part of the footboard.

### Description of the Drawings

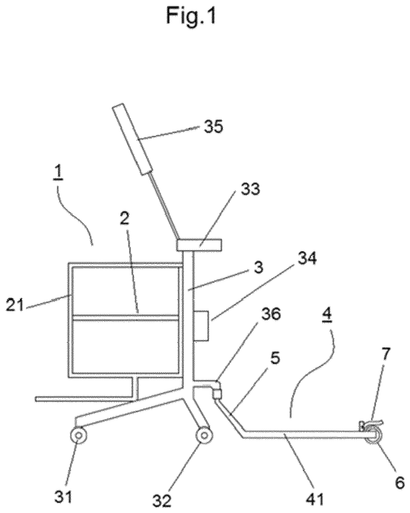

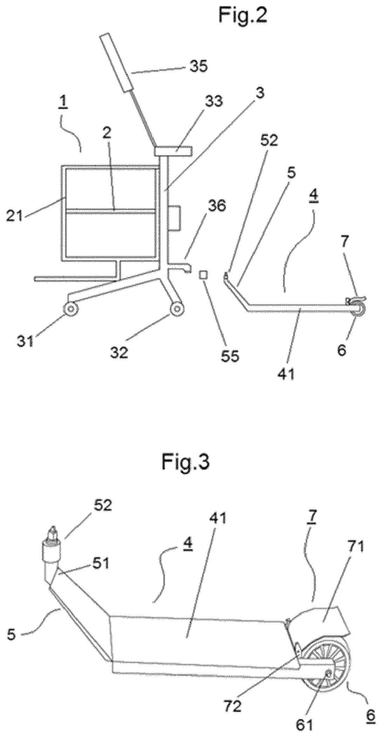

Figures 1 and 2 together show a type of loading trolley with a footboard, made up of a trolley (1) formed by a structure holding a plurality of shelves (2) distributed at different heights which allow the depositing of items or orders, all being supported by a frame (3) with front caster wheels (31) and rear fixed wheels (32), in which there is coupled in the frame (3) or lower part thereof an industrial footboard (4) which allows the user to travel around. The coupling consists of machining a metallic cylinder to make stops and a seating for the bearings housed therein, which is fixed to the structure of the trolley to form the support of ring-shaped coupling (36) with the footboard (4). Continuing with the explanation of the trolley (1), the structure holding a plurality of shelves (2) is formed by an assembly of vertically arranged shelves which allows filling several orders at the same time. This shelf structure (2) has vertical posts (21) that stiffen the assembly, and a plurality of horizontally arranged or slightly inclined profiles emerge from said posts (21) at different heights which allow and make it easier to deposit the orders at different heights. There is a handlebar (33) or similar driving element fixed in the frame (3) of the trolley, and there may also be a plurality of storage vessels (34) fixed to the frame at different heights, as well as a data tablet (35) for the user of the trolley.

Figures 3 to 5 show the industrial footboard (4) with various enlarged details thereof. In this sense, it can be observed that the footboards emerge from a base metallic platform (41), preferably an H-shaped quadrangular tubular platform closed at the upper part with another square tube by way of support, incorporating in its front part a coupling or attachment arm (5) between the trolley and the footboard, and in the back part at least one wheel (6) and a braking system (7).

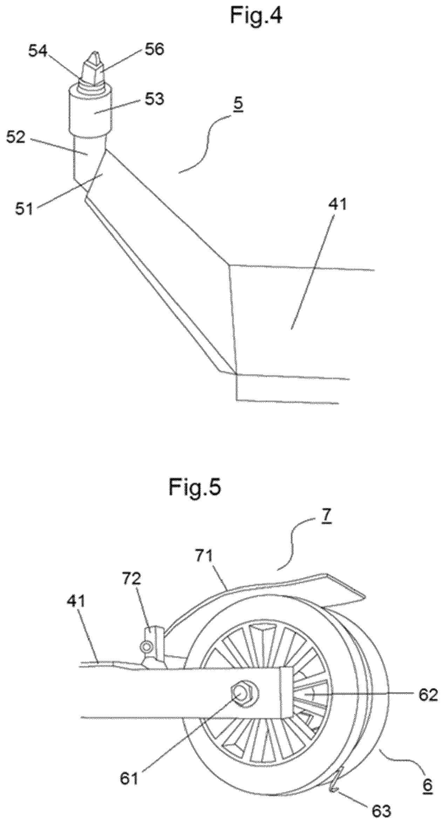

The arm (5), which can be seen in detail in Figure 4, is made up of a square metallic tube (51) that is welded to the structure or platform (41) of the footboard with an inclination and a length suitable for bridging the distance from the wheels of the trolley (31, 32), allowing the rotation thereof and serving, on one hand, as a support for the placement of the stem (52) for the attachment and assembly between parts. To form the stem (52), a metallic cylinder (53) is machined from the base to the upper part such that a diameter greater than the attachment ring (54) is maintained at the base of the cylinder. The stem (52) has a smaller diameter than the diameter of the base and it is thick enough to fit in the bearings; and finally, the upper part or tip (56) is machined and threaded by way of a stop for the subsequent placement of the nut and washer (55) securing the attachment between the trolley (1) and the footboard (4), once it is mounted and assembled.

Figure 5 shows the back part of the structure of the footboard, where a system of one or more wheels (6) parallel both to the structure (41) and to one another is assembled, and having a common axle (61) fixed at the ends thereof by means of lock washers and nuts to prevent them from being decoupled. There is mounted on the axle of the wheels (6) a sleeve (62) with a welded spring (63) that performs the function of a separating element in the case of multiple wheels to keep them in their correct position, and of keeping the brake plate (71) raised so that the braking system (7) is deactivated when it is not pressed, as defined below.

Additionally, said Figure 4 also shows that in one and the same back part of the frame or platform (41) of the footboard (4) there is fixed a braking system (7) made up of a non-slip brake plate (71) or pressure base, welded to a rotating shaft that is perforated and threaded at the ends for the rotation required for the user to activate the brake. Said plate is fixed to the footboard (4) by means of two supports (72) that are perforated and welded to the structure, which are used both by way of support and fixing with screws of said plate, and as stops to prevent the slipping or turning of the operating plate of the braking system (7) on its shaft.

Going back to Figure 1, once all the elements and parts of the structure of the footboard are assembled and coupled in an articulable manner, said footboard (4) is fixed to the loading trolley (1) such that the footboard serves as a support for the suitable transport of the operator or picker. This final assembly consists of introducing the stem (52) of the footboard into the ring-shaped coupling (36) with internal bearings of the trolley, and fixing it by means of a nut and a lock washer (55).

## Claims

1. A loading trolley with a footboard for collecting and distributing products in warehouses and logistics centers, made up of a loading trolley (1) which allows the depositing of items, in which the lower part of the frame (3) of said trolley (1) has front caster wheels (31) and rear wheels (32), in which the upper part of the frame has a handlebar (33), and wherein there is coupled at a point of its frame (3) an industrial footboard (4) which has a base metallic platform (41) and at least one wheel (6) at its back end, the assembly being **characterized in that** it comprises:
- a shelf structure (2) fixed to the frame (3) of the trolley (1) configured by a plurality of vertical posts (21) that stiffen the assembly from which a plurality of horizontally arranged or inclined profiles emerge at different heights;
- a cylindrical ring-shaped coupling (36) in the frame (3) of the trolley (1) with internal bearings;
- an inclined arm (5) at the front end of the footboard (4) having a stem (52) that is formed by a metallic cylinder (53) which is machined from the base to the upper part where an attachment ring (54) and a machined and threaded upper tip (56) are located by way of a stop;
- a braking system (7) at a back end of the footboard (4) comprising a non-slip brake plate (71) in the form of a flap which is fixed to the footboard by means of two metallic supports (72) and fixed to the structure or platform (41) with screws, and a welded spring (63) which maintains the position of the brake plate (71); and
- wherein the articulable attachment of the stem (52) of the footboard (4) in the cylindrical ring-shaped coupling (36) of the trolley (1) is secured by means of a nut and a lock washer (55).

2. The loading trolley with a footboard according to claim 1, **characterized in that** the wheels (6) are arranged parallel to one another, fixed by a common axle (61) which is fixed at its ends to the platform (41) of the footboard (4) by means of nuts.

3. The loading trolley with a footboard according to the preceding claims, **characterized in that** a sleeve (2) incorporating the welded spring (63) is mounted on the axle (61) of the wheels (6) for separating and maintaining the wheels (6).

4. The loading trolley with a footboard according to claim 1, **characterized in that** the platform (41) of the footboard (4) is formed by an H-shaped quadrangular tubular profile closed at the upper part by another square tube by way of support.

5. The loading trolley with a footboard according to claim 1, **characterized in that** the rear wheels (32) located on the frame (3) of the trolley (1) are fixed wheels.

6. The loading trolley with a footboard according to claim 1, **characterized in that** it has retaining guards on the sides of the shelves (2).
